# FASCICULE DE BREVET EUROPEEN

(11) **EP 3 372 478 B1**
(45) Date de publication et mention de la délivrance du brevet: **21.10.2020**
(21) Numéro de dépôt: 18154224.2
(22) Date de dépôt: 30.01.2018
(51) Int. Cl.: B62D 25/08, B62D 29/04, B60R 21/34

(54) **PIÈCE DE FACE AVANT DE VÉHICULE AUTOMOBILE SITUÉE DANS UNE ZONE DE CHOC TIBIA ET INTÉGRANT UN BOITIER RIGIDE**
FRONTPANEILENTEIL EINES KRAFTFAHRZEUGS IN EINEM SCHOCKBEREICH INTEGRIERT IN EIN STARRES GEHÄUSE
FRONT PANEL PART OF A MOTOR VEHICLE LOCATED IN A COLLOSION AREA INTEGRATED A RIGID HOUSING

(30) Priorité: 07.03.2017 FR 1751849
(43) Date de publication de la demande: 12.09.2018
(73) Titulaire: RENAULT s.a.s., 92100 Boulogne-Billancourt (FR)
(72) Inventeur: NGUYEN, Luan, 91120 Palaiseau (FR); LANCELOT, David, 45310 Gemigny (FR)

(56) Documents cités:
- EP-A1- 0 519 776
- EP-A1- 2 039 592
- EP-A1- 3 106 339
- FR-A1- 2 805 504
- US-A1- 2014 159 429

## Description

La présente invention se rapporte aux pièces de face avant de véhicule automobile. Plus particulièrement, la présente invention concerne les pièces dites de "face avant technique" supportant des éléments d'absorption de choc à l'avant du véhicule, - typiquement en avant du radiateur pour les véhicules à traction avant-.

Ces pièces, généralement moulées en plastique renforcé, soutiennent ou définissent des éléments d'absorption de choc à l'avant du véhicule. A ces pièces viennent souvent s'intégrer différentes fonctions : fixation des projecteurs situés de part et d'autre de la face avant technique, fixation de la serrure de capot. Avec les nouvelles normes concernant les chocs piétons, la face avant technique peut également soutenir, ou peut comporter une portion de sa structure, faisant office d'absorbeur vis-à-vis d'un éventuel impact d'un piéton par le véhicule.

D'autres capteurs, dispositifs émetteurs, équipements, radars, souvent encapsulés dans des boîtiers rigides, peuvent être insérés dans les logements ménagés dans la face avant technique. Ces boîtiers peuvent former des zones "dures" risquant de blesser un piéton lors d'un impact.

Les documents EP 3 106 339 A1, EP 2 039 592 A1 et FR 2 805 504 A1 décrivent des faces avant techniques comprenant une pièce moulée s'étendant transversalement à l'avant du véhicule.

L'invention a pour objet de proposer une structure de face avant technique permettant à la fois d'intégrer de nouvelles fonctions à la structure porteuse de la face avant technique, et permettant de satisfaire aux normes de sécurité, en particuliers aux normes concernant les impacts de type "choc piéton".

A cette fin, il est proposé une face avant technique de véhicule automobile, comprenant une pièce moulée, la pièce moulée étant configurée pour s'étendre transversalement à l'avant d'un véhicule, et la pièce moulée étant conçue pour soutenir ou pour former à l'avant du véhicule un absorbeur de choc centré sur la largeur du véhicule. La face avant technique comporte au moins un logement dimensionné pour y insérer une coque de boîtier de manière à ce que la coque de boîtier soit entourée par la structure de la face avant technique. Le logement définit, au travers de la pièce moulée, un orifice traversant à contour fermé, l'orifice étant configuré pour permettre un enfoncement de ladite coque de boîtier vers l'arrière du véhicule au travers d'une ouverture dudit orifice, sous l'effet d'un choc frontal sur la coque de boîtier.

Par choc frontal sur la coque de boîtier, on entend un choc dirigé vers l'arrière du véhicule, impactant la coque ou une portion du boîtier solidaire de la coque. La coque peut être par exemple un caisson de projecteur d'éclairage;

Avantageusement, en vue de face, le logement fait tout le tour du projecteur, c'est-à-dire que la face avant technique maintient le projecteur par des points de fixation répartis sur une circonférence fermée du logement. Il est ainsi possible de maintenir une relative intégrité de la face avant technique pour les faibles chocs, alors que le projecteur s'enfonce au travers de l'orifice sous l'effet du choc.

La pièce moulée peut être monobloc. Selon d'autres modes de réalisation, la pièce moulée peut être réalisée en deux parties définissant, une fois assemblée, un contour fermé de l'orifice traversant.

La face avant technique peut comporter des agrafes métalliques insérées chacune de part et d'autre d'une épaisseur d'une paroi formant le bord de l'orifice, les agrafes métalliques étant configurées pour pouvoir y fixer des vis ou des rivets.

L'ouverture de l'orifice traversant peut avantageusement présenter :
- Un contour extérieur d'ouverture, configuré pour permettre d'enfoncer la coque de boîtier au travers du contour extérieur d'ouverture,
- Un contour intérieur d'ouverture, définissant le contour initial de l'orifice, et définissant une section de passage restreinte par rapport à la section de passage du contour extérieur,
- des portions d'appui fusibles, rattachées au contour extérieur et/ou au contour intérieur, configurées pour se rompre en libérant au niveau de l'orifice une section de passage définie par le contour extérieur d'ouverture.

Avantageusement, le contour extérieur d'ouverture et la coque du boîtier sont configurés pour permettre d'enfoncer la coque de boîtier au travers du contour extérieur d'ouverture -de préférence sans forcer latéralement sur le contour extérieur d'ouverture-sur une profondeur d'au moins 30mm, de préférence sur une profondeur d'au moins 100mm, avantageusement sur une profondeur d'au moins 200mm.

Le dimensionnement des portions fusibles permet de contribuer à la définition du profil de force/d'énergie d'impact permettant d'obtenir l'enfoncement de la coque de boîtier au travers de l'orifice.

Le contour de l'orifice traversant peut par exemple en outre comporter au moins une portion de soutien sensiblement horizontale, configurée pour soutenir le poids du boîtier et pour guider l'enfoncement du boîtier au travers de l'épaisseur de la face avant technique en cas d'impact frontal sur le boîtier.

Par épaisseur de la face avant, on entend l'étendue de la face avant parallèlement à la direction longitudinale du véhicule.

Par impact frontal on entend un impact suivant une direction sensiblement parallèle à la direction d'avancement usuelle du véhicule, l'impact étant dirigé vers l'arrière du véhicule.

Une des portions fusibles peut former un coin de centrage en creux, s'étendant à partir du contour extérieur d'ouverture vers le centre de l'orifice, le coin de centrage étant configuré pour pouvoir y appuyer, de préférence suivant trois directions distinctes de l'espace, lors du positionnement de la coque de boîtier, un coin en relief complémentaire appartenant à la coque du boîtier.

La face avant technique peut comprendre en outre un projecteur d'éclairage, configuré pour être inséré dans le logement, la coque de boîtier étant la coque du projecteur.

Le projecteur peut comporter des pattes de fixation fusibles, dont l'extrémité est configurée pour être assemblée sur des points du contour de l'orifice traversant.

Avantageusement, l'extrémité des pattes de fixation fusibles est configurée pour être vissée sur les agrafes.

Par fixations fusibles, on entend par exemple, que lors d'un impact frontal sur le projecteur, les pattes de fixation cassent et permettent un recul du projecteur, avant un endommagement sensible du projecteur, et avant que le projecteur subisse une réduction mesurable de sa longueur sous l'effet de l'impact. Avantageusement, les pattes cèdent pour une force ou pour une énergie d'impact pour laquelle l'intégrité des zones d'agrafes est encore préservée.

Pour un choc normalisé de type choc tibia ECE-127, la forme du projecteur et la forme de l'orifice traversant sont conçues pour permettre un enfoncement du projecteur par exemple compris entre 100 et 200 mm suivant la direction avant-arrière du véhicule.

Les portions d'appui fusibles de la pièce moulée peuvent être configurées pour se rompre pour une force ou pour une énergie d'impact voisine de la force ou de l'énergie d'impact nécessaire pour briser les pattes fusibles, par exemple la force / l'énergie d'impact pour casser l'ensemble des portions d'appui fusibles de la pièce moulée peut être comprise entre une et deux fois l'énergie d'impact nécessaire pour casser l'ensemble des pattes fusibles du projecteur.

Selon un mode de réalisation, chaque patte fusible peut être superposée à une portion fusible de la pièce moulée, la force d'impact prévisible de rupture de la portion fusible de la pièce moulée étant comprise entre 0,5 et 2 fois la force d'impact prévisible de rupture de la patte fusible associée.

Les portions d'appui fusibles peuvent être configurées pour servir d'appui au projecteur lors d'un prépositionnement du projecteur lors du montage.

Selon un autre mode de réalisation, les portions d'appui fusibles peuvent être en retrait vers l'arrière du véhicule par rapport au projecteur, de manière à décaler leur rupture dans le temps par rapport à la rupture des pattes, et limiter ainsi la décélération maximale subie par l'impacteur, ou par un piéton percuté par le projecteur du véhicule.

Selon un mode de réalisation préféré, au moins une partie des portions d'appui fusibles peuvent former des ponts fusibles entre deux points de l'orifice traversant destiné à laisser passer le projecteur.

Selon un mode de réalisation avantageux, au moins une des pattes de fixation du projecteur croise, vu en projection de face, au moins une portion d'une des portions d'appui fusibles de la pièce moulée.

Ainsi, si une des pattes présente un retard de rupture, la portion fusible associée peut rompre avant la patte pour consommer une partie de l'énergie de choc, ce qui permet de répartir dans le temps la courbe de décélération subie par l'impacteur.

L'invention concerne également un véhicule comportant une face avant technique telle que décrite précédemment, la face avant technique comportant deux premiers projecteurs aptes chacun à s'enfoncer au travers d'un orifice traversant ménagé dans la pièce moulée.

Le véhicule peut comprendre en outre au moins deux deuxièmes projecteurs latéraux situés de part et d'autre, l'un à droite, l'autre à gauche, de la pièce moulée.

Les deuxièmes projecteurs peuvent se trouver en retrait vers l'arrière par rapport aux premiers projecteurs, suivant la direction allant de l'avant vers l'arrière du véhicule.

Une portion de la face avant technique portant au moins un des deux premiers projecteurs, peut se trouver avantageusement à une hauteur par rapport au sol incluse dans un intervalle compris entre 350mm et 650mm.

La portion de la face avant technique portant le projecteur, peut se trouver latéralement entre un plan vertical médian du véhicule et un plan distant d'au plus 550mm du plan vertical médian.

Quelques buts, caractéristiques et avantages de l'invention apparaîtront à la lecture de la description suivante, donnée uniquement à titre d'exemple non limitatif, et faite en référence aux dessins annexés sur lesquels :
- La figure 1 est une vue schématique d'un véhicule montrant un exemple de positionnement d'une face avant technique au sein de la surface frontale d'une face avant de véhicule;
- La figure 2 est une vue simplifiée en perspective, d'une face avant technique selon l'invention, intégrant deux projecteur lumineux, la projection frontale de ces deux projecteurs étant comprise à l'intérieur du contour de la projection frontale de la FAT;
- La figure 3 est une vue frontale, à partir de l'avant du véhicule, d'une portion de face avant technique selon l'invention ;
- La figure 4 est une vue de la portion de face avant technique de la figure 3, vue à partir de la direction opposée, c'est-à-dire par l'arrière par rapport à la position de montage sur le véhicule;
- la figure 5 est une vue de la portion de face avant technique de la figure 3, vue par l'arrière par rapport à la position de montage sur le véhicule, avant l'assemblage du projecteur visible sur les figures 3 et 4.

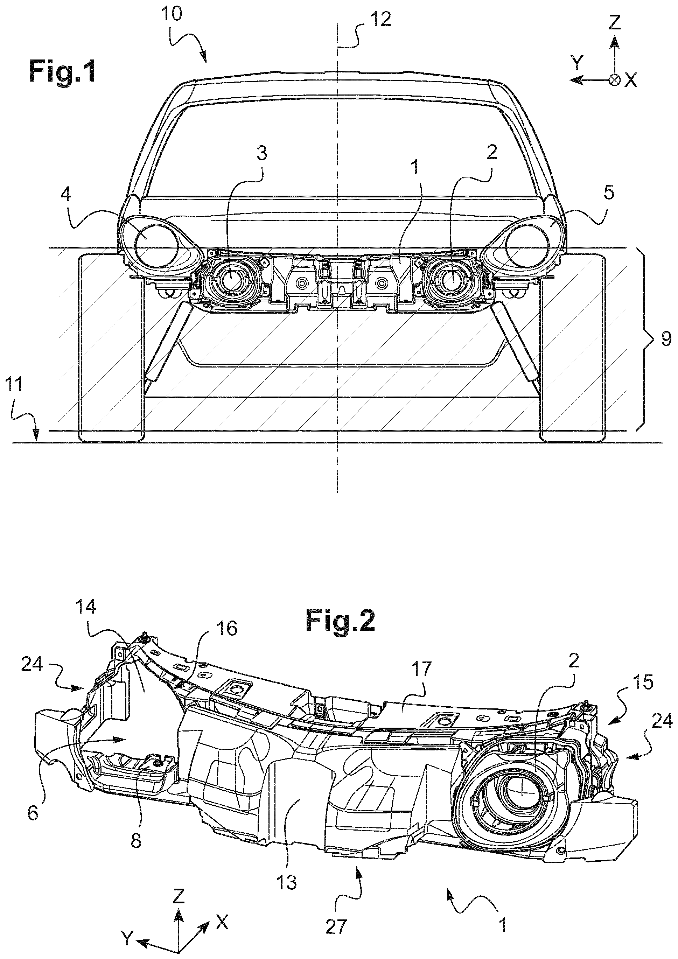

La figure 1 est une vue de situation illustrant la localisation typique d'une face avant technique de véhicule. Un véhicule 10 vu par l'avant comprend ici une face avant technique 1, située sous le capot moteur entre deux projecteurs latéraux 4 et 5, la face avant technique englobant elle-même deux projecteurs additionnels référencés 2 et 3.

Dans tout ce qui suit, la face avant technique est repérée par des axes X, Y, Z coïncidant respectivement, lorsque la face avant technique est assemblée sur le véhicule, à un axe X horizontal dirigé de l'avant vers l'arrière du véhicule, à un axe Y horizontal dirigé transversalement au véhicule, et à un axe Z dirigé verticalement vers le haut.

La face avant technique supportant généralement des pièces servant au verrouillage du capot avant, elle s'étend de haut en bas à partir du capot, sur une hauteur verticale qui peut varier suivant le modèle du véhicule.

Une partie de la face avant technique peut ainsi se trouver dans une zone de choc tibia 9, définie par exemple dans des procédures de test connues, par une plage de hauteur à partir du sol 11.

Dans cette zone de hauteur, les éléments formant le contour extérieur du véhicule doivent répondre désormais à certaines normes de choc concernant par exemple les impacts du véhicule sur/par un piéton.

Dans l'exemple illustré sur la figure 1, la face avant technique n'occupe pas toute la largeur du véhicule. En outre, la face avant technique illustrée ne descend pas ici au dessous du niveau de l'axe des roues.

On peut envisager des variantes de réalisation avec des faces avant techniques plus larges et/ou avec des face avant technique s'étendant sur des plages de hauteurs plus étendues, par exemple sur toute la largeur du véhicule, et/ou en dessous de l'axe des roues.

La figure 2 illustre une face avant technique selon l'invention, qui pourrait correspondre à la face avant technique schématisée sur la figure 1.

On retrouve sur la figure 2 des éléments communs à la figure 1, les mêmes éléments étant désignés par les mêmes références.

La face avant technique comprend une pièce moulée structurelle 15. Cette pièce peut être typiquement moulée en matière thermoplastique, ou moulée en matière thermodurcissable. La pièce peut être injectée par exemple en matière thermoplastique de type polyamide ou polypropylène ou renforcée par des fibres de verre.

D'autres matériaux sont bien sûr envisageables. Du fait de la forme complexe de la face avant technique, la pièce moulée structurelle, celle-ci est cependant, de préférence, réalisée par des méthodes de type moulage.

La pièce moulée 15 comprend ici une face supérieure 17 sensiblement horizontale, la face supérieure comportant des reliefs et des orifices destinées à cueillir par exemple des éléments de verrouillage du capot (non illustrés). La même pièce moulée 15 définit un premier et un deuxième logement 14 pour chacun des projecteurs 2, 3.

Afin de montrer le mode d'intégration des projecteurs additionnels 2, 3, un seul projecteur additionnel 2 est représenté, dans sa position de montage, sur la figure 2, de manière à laisser voir la forme du logement 14 dans lequel sera inséré l'autre projecteur additionnel 3.

Sur l'avant de la pièce moulée 15 est assemblé un absorbeur de choc rapporté 13, qui peut être par exemple réalisé en mousse -par exemple de type polypropylène expansé-. L'absorbeur de choc rapporté 13 a pour but d'atténuer la sévérité des chocs piétons en zone centrale de la face avant technique.

Derrière l'absorbeur de choc 13, la pièce moulée 15 forme une paroi frontale 27 contribuant à la résistance structurelle de la face avant technique. La paroi frontale 27 de la pièce moulée peut intégrer des reliefs, par exemple de type cône d'absorption de choc, configurés à la fois pour aider à soutenir l'absorbeur rapporté 13, et pour contribuer eux-mêmes à l'absorption de l'énergie de choc.

Dans l'exemple illustré, la face avant technique 1 et la pièce moulée 15 sont sensiblement symétriques par rapport à un plan médian X Z vertical du véhicule.

La pièce moulée 15 comporte notamment deux logements symétriques 14, configurés pour y insérer les projecteurs additionnels 2 et 3 (projecteur 3 non représenté sur la figure 2).

Tel que visible sur la figure 2, chaque logement 14 forme un orifice traversant 6. L'orifice 6 traverse la face avant technique suivant la direction X.

L'orifice 6 est entouré par un contour fermé 16, dont la projection frontale forme un contour fermé autour d'une projection d'une portion ouverte de l'orifice 6. Par projection frontale on entend ici une projection suivant la direction X.

La face avant technique entoure donc chacun des projecteurs additionnels 2 et 3, ce qui permet de maintenir en place les projecteurs additionnels 2, 3 en profitant de la résistance structurelle de la face avant technique.

La pièce moulée 15 forme ici une coque avec deux faces sensiblement perpendiculaires, soit la face supérieure 17, et une face frontale sensiblement verticale, peu visible sur la figure 2 car masquée par l'absorbeur 13. La pièce moulée forme ainsi une poutre en "L" s'étendant suivant la largeur du véhicule.

La pièce moulée comprend également deux joues latérales 24, reliées aux extrémités droite et gauche des deux deux faces de la poutre en L.

L'orifice 6 est ici ménagé de manière à ce que le contour fermé 16 s'étende pour partie le long de la face supérieure 17, pour partie en partie basse de la face avant verticale de la pièce moulée 15, et pour partie le long des joues latérales 24 de la pièce moulée 15. Le contour fermé définit une courbe gauche (i.e. non plane). Ainsi, un projecteur ou un autre élément rigide assemblé sur ce contour, peut être maintenu efficacement à l'encontre d'efforts dirigés suivant les trois directions de l'espace, les portion supérieure, la portion frontale, et la portion de joue de la pièce moulée présentant des rigidités maximales suivant des directions différentes et complémentaires.

On remarque également sur la figure 2, qu'une portion inférieure du logement 14 est formée par une portion horizontale de soutien 8, s'étendant à partir du contour fermé 16, et contribuant à soutenir le poids du projecteur inséré dans le logement 14.

En positionnant ainsi chacun des projecteurs additionnels dans un orifice 6 traversant la face avant technique d' avant en arrière du véhicule, on limite la valeur maximale que la force et/ou l'énergie de choc doit atteindre pour déplacer le projecteur d'avant en arrière par rapport à sa position initiale sur le véhicule.

En facilitant un tel enfoncement du projecteur, on limite la décélération subie par un impacteur ou par un tibia, lorsque cet impacteur est projeté sur une zone de la face avant technique comprenant un des projecteurs additionnels 2 ou 3.

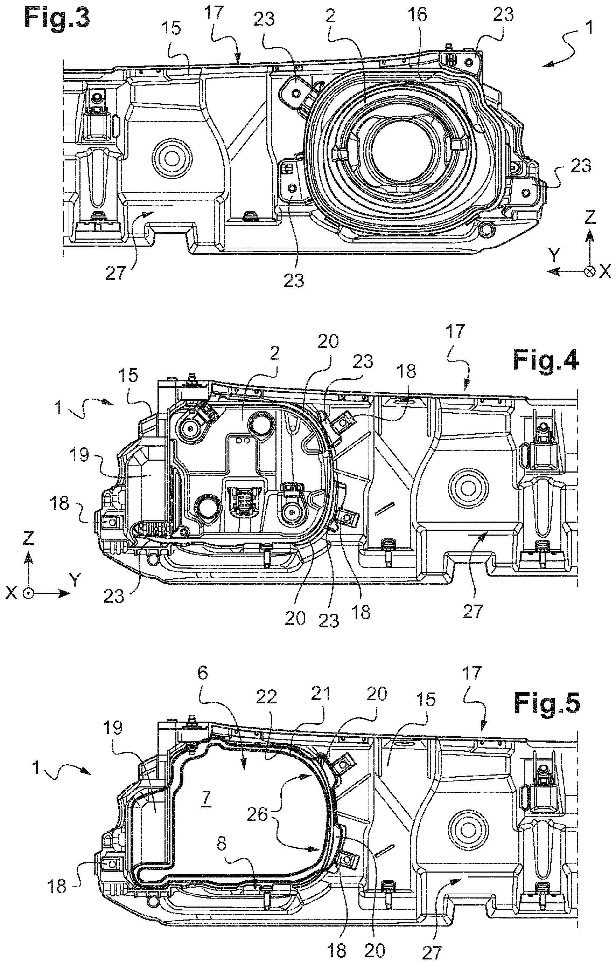

La figure 3 est une vue frontale de la face avant technique 1, montrant les points d'assemblage entre le projecteur 2 et la pièce moulée 15. On retrouve sur la figure 3 des éléments communs aux figures précédentes, les mêmes éléments étant désignés par les mêmes références. Le projecteur 2 est assemblé sur la pièce moulée 15, par des pattes 23 s'étendant radialement à partir d'un axe central du projecteur 2 (on suppose ici l'axe central du projecteur dirigé sensiblement suivant l'axe X). Ces pattes 23 viennent en appui sur le contour fermé 16 de l'orifice 6. Chacune de ces pattes forme une portion fusible entre la zone d'assemblage de la pate sur la pièce 15, et le projecteur 2 lui-même.

Ainsi, on facilite l'enfoncement du projecteur à l'intérieur de l'orifice 6, qui peut s'effacer à l'intérieur de la face avant technique sous l'effet d'un impact frontal, sans qu'il soit nécessaire de déformer ou de rompre la pièce 15 ou de déformer le projecteur 2 -qui forme généralement une structure plus rigide localement que la pièce 15-.

La figure 4, qui reprend les éléments de la figure 2, vus par la direction opposée, permet d'apercevoir des agrafes 18 insérées de part et d'autre de l'épaisseur de la pièce 15. Ces agrafes, par exemple métalliques, peuvent accueillir chacune une vis ou un rivet de rétention des pattes fusible 23.

La résistance des agrafes métalliques 18 permet lors du choc, de localiser la contrainte au niveau d'une portion intermédiaire des pattes 23, afin que la rupture des pattes se passe dans une zone prévue, et pour une courbe d'énergie de choc prévue.

On remarque en outre, sur la figure 4, que la pièce 15 ne laisse pas un passage complètement ouvert à l'enfoncement du projecteur 2. La pièce 15s comporte elle-même des portions fusibles 19, 20 situées en arrière du projecteur. Ces portions fusibles peuvent former des pontons 20 de matière, reliant des échancrures de la pièce 15 destinée à accueillir les pattes fusible 23. Ces échancrures permettent de laisser l'espace de déformation nécessaire à la rupture des pattes 23.

La pièce 15 peut également comporter une ou plusieurs portions fusibles formant une excroissance à partir de la pièce 15, de manière à définir une languette ou un coin fusible dépassant à l'intérieur de la section de passage du projecteur 2. Ici la pièce 15 comprend un coin 19 recouvrant une portion de l'arrière du projecteur 2.

Ces portions fusibles de la pièce moulée 15 peuvent être conçues de manière à faciliter le positionnement du projecteur 2 lors de son montage. Les portions fusibles de la pièce 15 peuvent également contribuer à distribuer l'énergie consommée lors du choc, en démultipliant les zones de rupture.

La figure 5 reprend les éléments de la figure 4 à l'exception du projecteur 2. La figure 5 permet ainsi de mieux appréhender la géométrie du contour 16 de l'orifice 6. En projection suivant l'axe X, l'orifice 6 comporte une ouverture de passage 7 traversante. Cette ouverture traversante est ouverte dès avant l'assemblage du projecteur. Cette ouverture 7 est délimitée par un contour intérieur d'ouverture 21.

Par rupture des zones fusibles 19, 20, l'ouverture de passage 7 préexistante peut être augmentée à une ouverture élargie disponible pour l'enfoncement du projecteur, l'ouverture élargie étant délimitée par un contour extérieur d'ouverture 22.

Le contour extérieur d'ouverture comporte notamment des échancrures 26 destinées à autoriser un déplacement suivant X des portions des pattes 23 restant attachées au projecteur 2 après rupture des pattes. Comme visible sur la figure 4, certaines portions fusibles 20, peuvent venir croiser les pattes d'assemblage 23. Dans le mode de réalisation illustré, les portions fusibles 20 s'étendent par-dessus les échancrures 26 de manière à suivre un contour d'un boîtier du projecteur, facilitant ainsi le positionnement du boîtier lors de l'assemblage.

L'invention ne se limite pas aux exemples de réalisation décrits, et peut se décliner en de nombreuses variantes. L'élément englobé par la face avant technique, et configuré de manière à pouvoir reculer à l'intérieur de celle-ci, peut être différent d'un projecteur. Il peut s'agir de tout organe dont la matière et la forme risquent de présenter localement une rigidité supérieure à celle de la structure de la face avant technique telle qu'elle aurait pu être conçue en l'absence de cet élément.

Dans l'exemple illustré, le projecteur occupe une hauteur qui représente la majorité de la hauteur de la face avant technique. L'invention peut également s'appliquer à des éléments qui n'occupent qu'une portion réduite de la surface et/ou de la hauteur de la face avant technique.

L'invention peut également s'appliquer à des organes qui ne seraient pas disposés symétriquement deux par deux, de part et d'autre du véhicule.

L'invention peut avantageusement s'appliquer à des organes qui ne peuvent être masqués par des absorbeurs de chocs, typiquement à des émetteurs ou des récepteurs dont les ondes seraient perturbées par un tel absorbeur de choc faisant écran.

## Revendications

1. Face avant technique (1) de véhicule automobile, comprenant une pièce moulée (15) configurée pour s'étendre à l'avant d'un véhicule (10), transversalement au véhicule, la pièce moulée (15) étant conçue pour soutenir ou pour former à l'avant du véhicule un absorbeur de choc (13) centré sur la largeur du véhicule, la face avant technique (1) comportant au moins un logement (14) dimensionné pour y insérer une coque de boîtier (2, 3) de manière à ce que la coque de boîtier (2, 3) soit entourée par la structure de la face avant technique (1), le logement (14) définissant, au travers de la pièce moulée (15), un orifice (6) traversant à contour fermé (16), l'orifice étant configuré pour permettre un enfoncement de ladite coque de boîtier (2, 3) vers l'arrière (X) du véhicule (10) au travers d'une ouverture (7) dudit orifice (6), sous l'effet d'un choc frontal sur la coque de boîtier (2, 3), la face avant technique étant **caractérisée en ce que** l'ouverture (7) de l'orifice traversant présente :
- Un contour (22) extérieur d'ouverture défini par la pièce moulée (15), configuré pour permettre d'enfoncer la coque de boîtier (2, 3) au travers du contour extérieur d'ouverture (22),
- Un contour intérieur d'ouverture (21) défini par la pièce moulée (15), définissant un contour initial de l'orifice (6), et définissant une ouverture (7) de passage restreinte par rapport à l'ouverture de passage définie par le contour extérieur d'ouverture (22),
- des portions d'appui fusibles (19, 20) appartenant à la pièce moulée (15), rattachées au contour extérieur (22) d'ouverture et/ou au contour intérieur (21) d'ouverture, les portions d'appui fusibles (19, 20) étant configurées pour se rompre en libérant au niveau de l'orifice (6) une ouverture de passage définie par le contour extérieur d'ouverture (22).

2. Face avant technique selon la revendication 1, comportant des agrafes métalliques (18) insérées chacune de part et d'autre d'une épaisseur d'une paroi formant le contour ferme (16) de l'orifice (6), les agrafes métalliques (18) étant configurées pour pouvoir y fixer des vis ou des rivets.

3. Face avant technique selon l'une des revendications précédentes, dans laquelle le contour fermé (16) de l'orifice traversant (6) comporte au moins une portion de soutien (8) sensiblement horizontale, configurée pour soutenir le poids de la coque de boîtier (2, 3) et pour guider l'enfoncement de la coque de boîtier (2, 3) au travers de l'épaisseur de la face avant technique en cas d'impact frontal sur la coque de boîtier (2, 3).

4. Face avant technique selon la revendication précédente, une des portions d'appui fusibles (19) formant un coin de centrage en creux s'étendant à partir du contour extérieur d'ouverture (22) vers le centre de l'orifice (6), ladite portion d'appui fusible (19) étant configurée pour pouvoir y appuyer, lors du positionnement de la coque de boîtier (2, 3) au montage, un coin en relief appartenant à la coque du boîtier (2, 3), complémentaire du coin de centrage en creux.

5. Face avant technique selon l'une quelconque des revendications précédentes, comprenant en outre un projecteur d'éclairage (2, 3) configuré pour être inséré dans le logement (14).

6. Face avant technique selon la revendication précédente, le projecteur (2, 3) comportant des pattes de fixation (23) fusibles dont l'extrémité est configurée pour être assemblée sur des points du contour fermé (16) de l'orifice traversant (6).

7. Face avant technique selon les revendications 1 et 5 combinées, dans laquelle au moins une des pattes de fixation (23) du projecteur croise, vue en projection face au véhicule, au moins une portion d'une des portions d'appui fusibles (19, 20) de la pièce moulée (15).

8. Véhicule (10) comportant une face avant technique (1) selon l'une quelconque des revendications précédentes, la face avant technique (1) comportant deux premiers projecteurs (2, 3) aptes chacun à s'enfoncer au travers d'un orifice (6) traversant dédié ménagé dans la pièce moulée (15), le véhicule (10) comprenant en outre au moins deux deuxièmes projecteurs (4, 5) latéraux situés de part et d'autre, l'un à droite, l'autre à gauche, de la pièce moulée (15).

9. Véhicule selon la revendication 9, dans lequel une portion de la face avant technique (1) portant au moins l'un des deux premiers projecteurs (2, 3), se trouve à une hauteur par rapport au sol incluse dans un intervalle compris entre 350mm et 650mm, et se trouve latéralement entre un plan vertical du véhicule et un plan distant d'au plus 550mm du plan vertical médian.

## Patentansprüche

1. Technische Vorderseite (1) eines Kraftfahrzeugs, welche ein Formteil (15) umfasst, das dazu ausgebildet ist, sich vorn an einem Fahrzeug (10) zu erstrecken, quer zum Fahrzeug, wobei das Formteil (15) dafür ausgelegt ist, vorn an dem Fahrzeug einen Aufpralldämpfer (13) abzustützen oder zu bilden, der auf der Breite des Fahrzeugs zentriert ist, wobei die technische Vorderseite (1) wenigstens eine Aufnahme (14) umfasst, die dafür bemessen ist, eine Gehäuseschale (2, 3) hierin einzusetzen, derart, dass die Gehäuseschale (2, 3) von der Struktur der technischen Vorderseite (1) umgeben ist, wobei die Aufnahme (14) durch das Formteil (15) hindurch ein Durchgangsloch (6) mit geschlossener Kontur (16) definiert, wobei das Loch dazu ausgebildet ist, ein Eindrücken der Gehäuseschale (2, 3) zur Hinterseite (X) des Fahrzeugs (10) hin durch eine Öffnung (7) des Loches (6) hindurch unter der Wirkung eines Frontalaufpralls auf die Gehäuseschale (2, 3) zu ermöglichen, wobei die technische Vorderseite **dadurch gekennzeichnet ist, dass** die Öffnung (7) des Durchgangsloches aufweist:
- eine durch das Formteil (15) definierte äußere Öffnungskontur (22), die dafür ausgebildet ist zu ermöglichen, die Gehäuseschale (2, 3) durch die äußere Öffnungskontur (22) hindurch einzudrücken,
- eine durch das Formteil (15) definierte innere Öffnungskontur (21), die eine Anfangskontur des Loches (6) definiert und eine verminderte Durchlassöffnung (7) definiert, bezogen auf die durch die äußere Öffnungskontur (22) definierte Durchlassöffnung,
- zum Formteil (15) gehörende schmelzbare Anlageabschnitte (19, 20), die an die äußere Öffnungskontur (22) und/oder an die innere Öffnungskontur (21) angesetzt sind, wobei die schmelzbaren Anlageabschnitte (19, 20) dafür ausgebildet sind, zu zerbrechen und dabei am Loch (6) eine Durchlassöffnung freizugeben, die durch die äußere Öffnungskontur (22) definiert ist.

2. Technische Vorderseite nach Anspruch 1, welche metallische Klammern (18) aufweist, die jeweils beiderseits einer Dicke einer Wand eingesetzt sind, welche die geschlossene Kontur (16) des Loches (6) bildet, wobei die metallischen Klammern (18) dazu ausgebildet sind, Schrauben oder Niete daran befestigen zu können.

3. Technische Vorderseite nach einem der vorhergehenden Ansprüche, wobei die geschlossene Kontur (16) des Durchgangsloches (6) wenigstens einen im Wesentlichen horizontalen Unterstützungsabschnitt (8) aufweist, der dazu ausgebildet ist, das Gewicht der Gehäuseschale (2, 3) abzustützen und das Eindrücken der Gehäuseschale (2, 3) durch die Dicke der technischen Vorderseite hindurch im Falle eines Frontalaufpralls auf die Gehäuseschale (2, 3) zu führen.

4. Technische Vorderseite nach dem vorhergehenden Anspruch, wobei einer der schmelzbaren Anlageabschnitte (19) einen als Vertiefung ausgebildeten Zentrierkeil bildet, der sich von der äußeren Öffnungskontur (22) aus zur Mitte des Loches (6) hin erstreckt, wobei der schmelzbare Anlageabschnitt (19) dazu ausgebildet ist, hier bei der Positionierung der Gehäuseschale (2, 3) zur Montage einen zu der Gehäuseschale (2, 3) gehörenden erhabenen Keil abstützen zu können, der zu dem als Vertiefung ausgebildeten Zentrierkeil komplementär ist.

5. Technische Vorderseite nach einem der vorhergehenden Ansprüche, welche außerdem einen Scheinwerfer (2, 3) umfasst, der dazu ausgebildet ist, in die Aufnahme (14) eingesetzt zu werden.

6. Technische Vorderseite nach dem vorhergehenden Anspruch, wobei der Scheinwerfer (2, 3) schmelzbare Befestigungslaschen (23) aufweist, deren Ende dazu ausgebildet ist, an Punkten der geschlossenen Kontur (16) des Durchgangsloches (6) montiert zu werden.

7. Technische Vorderseite nach den kombinierten Ansprüchen 1 und 5, wobei wenigstens eine der Befestigungslaschen (23) des Scheinwerfers, in Projektion von vorn auf das Fahrzeug gesehen, wenigstens einen Abschnitt eines der schmelzbaren Anlageabschnitte (19, 20) des Formteils (15) kreuzt.

8. Fahrzeug (10), welches eine technische Vorderseite (1) nach einem der vorhergehenden Ansprüche aufweist, wobei die technische Vorderseite (1) zwei erste Scheinwerfer (2, 3) aufweist, die jeweils geeignet sind, durch ein dazu bestimmtes Durchgangsloch (6) hindurch, das im Formteil (15) ausgebildet ist, eingedrückt zu werden, wobei das Fahrzeug (10) außerdem wenigstens zwei seitliche zweite Scheinwerfer (4, 5) aufweist, die sich beiderseits des Formteils (15) befinden, einer rechts und der andere links davon.

9. Fahrzeug nach Anspruch 9, wobei sich ein Abschnitt der technischen Vorderseite (1), der wenigstens einen der zwei ersten Scheinwerfer (2, 3) trägt, auf einer Höhe in Bezug auf den Boden befindet, die in einem Intervall von 350 mm bis 650 mm liegt, und sich seitlich zwischen einer vertikalen Ebene des Fahrzeugs und einer Ebene, die höchstens 550 mm von der vertikalen Mittelebene entfernt ist, befindet.

## Claims

1. Technical front panel (1) of a motor vehicle, comprising a moulded part (15) configured to extend at the front of a vehicle (10), transversely to the vehicle, the moulded part (15) being designed to support or to form at the front of the vehicle an impact absorber (13) centred on the width of the vehicle, the technical front panel (1) comprising at least one recess (14) dimensioned such that it is possible to insert therein a housing shell (2, 3) in such a way that the housing shell (2, 3) is surrounded by the structure of the technical front panel (1), the recess (14) defining, through the moulded part (15), a through-orifice (6) having a closed contour (16), the orifice being configured to allow said housing shell (2, 3) to be pushed in towards the rear (X) of the vehicle (10) through an opening (7) of said orifice (6), under the effect of a frontal impact on the housing shell (2, 3), the technical front panel being **characterized in that** the opening (7) of the through-orifice has:
- an outer opening contour (22) defined by the moulded part (15), configured to allow the housing shell (2, 3) to be pushed in through the outer opening contour (22),
- an inner opening contour (21) defined by the moulded part (15), defining an initial contour of the orifice (6), and defining an opening (7) of restricted passage in relation to the passage opening defined by the outer opening contour (22),
- fusible bearing portions (19, 20) belonging to the moulded part (15) and attached to the outer opening contour (22) and/or to the inner opening contour (21), the fusible bearing portions (19, 20) being designed to break, thus freeing, at the orifice (6), a passage opening defined by the outer opening contour (22).

2. Technical front panel according to Claim 1, comprising metal staples (18), each inserted on either side of a thickness of a wall forming the closed contour (16) of the orifice (6), the metal staples (18) being configured so as to make it possible to secure screws or rivets thereto.

3. Technical front panel according to either of the preceding claims, wherein the closed contour (16) of the through-orifice (6) comprises at least one essentially horizontal support portion (8) that is configured to support the weight of the housing shell (2, 3) and to guide the pushing-in of the housing shell (2, 3) through the thickness of the technical front face in the event of a frontal impact on the housing shell (2, 3).

4. Technical front panel according to the preceding claim, one of the fusible bearing portions (19) forming a hollow centring corner extending from the outer opening contour (22) towards the centre of the orifice (6), said fusible bearing portion (19) being configured to be able to press thereon, during positioning of the housing shell (2, 3) during assembly, a corner in relief belonging to the housing shell (2, 3), which is complementary of the hollow centring corner.

5. Technical front panel according to any one of the preceding claims, further comprising a lighting projector (2, 3) configured to be inserted into the recess (14).

6. Technical front panel according to the preceding claim, the projector (2, 3) comprising fusible attachment tabs (23), the end of which is configured to be assembled on points of the closed contour (16) of the through-orifice (6).

7. Technical front panel according to Claims 1 and 5 combined, wherein at least one of the attachment tabs (23) of the projector intersects, seen in projection facing the vehicle, at least one portion of one of the fusible bearing portions (19, 20) of the moulded part (15).

8. Vehicle (10) comprising a technical front panel (1) according to any one of the preceding claims, the technical front panel (1) comprising two first projectors (2, 3), each able to push in through a dedicated through-orifice (6) created in the moulded part (15), the vehicle (10) further comprising at least two lateral second projectors (4, 5) located on either side, one on the left and one on the right, of the moulded part (15).

9. Vehicle according to Claim 9, wherein a portion of the technical front panel (1) bearing at least one of the two first projectors (2, 3) is located at a height, relative to the ground, that is included in an interval between 350 mm and 650 mm, and is located laterally between a vertical plane of the vehicle and a plane no more than 550 mm removed from the median vertical plane.
